# EUROPEAN PATENT SPECIFICATION

(11) **EP 2 784 637 B1**
(45) Date of publication and mention of the grant of the patent: **03.04.2019**
(21) Application number: 13199689.4
(22) Date of filing: 27.12.2013
(51) Int. Cl.: G06F 3/044

(54) **Touch screen, touch display panel and touch display device**
Berührungsbildschirm, Berührungsanzeigetafel und Berührungsanzeigevorrichtung
Écran tactile, panneau d'affichage tactile et dispositif d'affichage tactile

(30) Priority: 25.03.2013 CN 201310095768
(43) Date of publication of application: 01.10.2014
(73) Proprietor: Shanghai Tianma Micro-electronics Co., Ltd., Pudong New District Shanghai 201201 (CN); Tianma Micro-Electronics Co., Ltd., Shenzhen Guangdong 518052 (CN)
(72) Inventor: Lou, Junhui, 201201 Shanghai (CN); Wang, Lihua, 201201 Shanghai (CN)
(74) Representative: Epping - Hermann - Fischer

(56) References cited:
- US-A1- 2009 135 151
- US-A1- 2012 113 021
- US-B2- 8 174 510

## Description

### FIELD OF THE INVENTION

The invention relates to the field of touch screen, and in particular to a touch screen, a touch display panel and a touch display device including the touch screen.

### BACKGROUND OF THE INVENTION

As an interface tool for operating an electronic device by a display screen, a touch screen allows a user to directly input information on a surface of a touch display device equipped with a touch screen by point-touching or handwriting and thus is more friendly and convenient than an input device such as a mouse and a keyboard, therefore the touch screen is increasingly widely applied in various portable devices.

According to the type of the contact object (such as a finger and a pen) that is used and the method of identifying a point (a position where the contact object operates the touch screen), the touch screen can be classified as a resistive one, a capacitive one, a surface acoustic wave one, and an infrared one and so on. Presently, the capacitive touch screen technology is used widely. More technologies related to the capacitive touch screen can be found in the Chinese invention patent publication CN102193700A.

According to the relative position relation between a touch structure layer with a function of touch detection and a display panel, the touch screen may be classified as an ON-CELL one and an IN-CELL one.

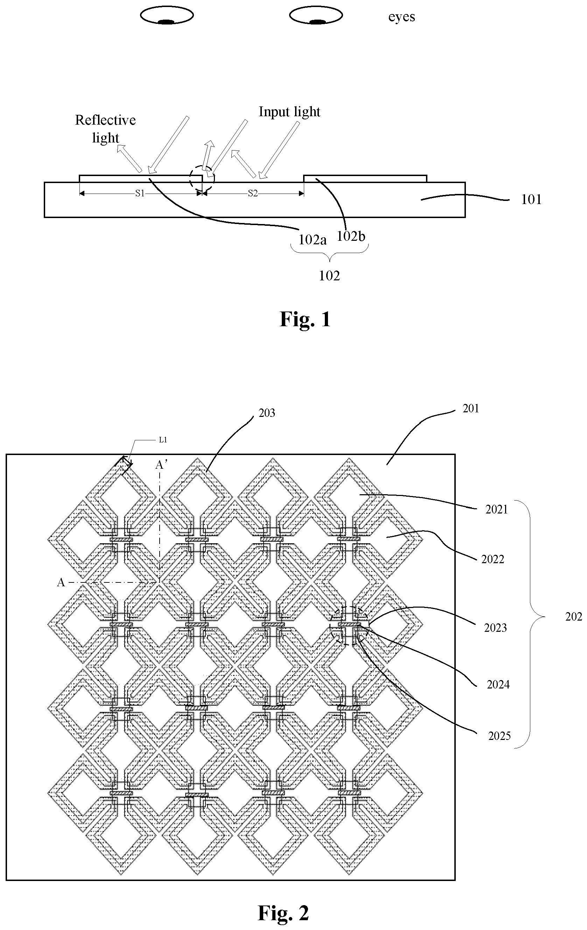

Where, the touch structure layer may be arranged on a surface of a substrate close to the human eyes. Specifically, the touch structure layer in the ON-CELL touch screen is arranged on an external surface of a color film substrate of the display panel. As shown in Figure 1, the touch structure layer 102 is arranged on the surface of the substrate 101 close to the human eyes. The substrate is generally a transparent substrate, and the material thereof may be glass or quartz or the like. The touch structure layer 102 includes multiple transparent conductive patterns 102a, 102b and so on; the transparent conductive pattern 102 is generally made of a material such as ITO. The transparent conductive pattern 102 such as ITO is visible under the ambient light (especially, in case of a strong light), which is always an important problem to be solved for the application of the touch screen, especially for the application of the ON-CELL touch screen.

A technical solution for reducing the visibility of the transparent conductive pattern in the ON-CELL touch screen is disclosed in the US granted patent (Patent No. US8068186B2). However, according to the technical solution, it is needed to add an insulting layer conforming to a specific requirement, which limits the selection range of the material.

US 2012/113021 A1 discloses a touch panel device, the touch panel stackup includes a substrate, a first conductive element having a first refractive index and forming a plurality of patterns with on or more gaps on the substrate having an address for sensing tactile signals in a first direction and a second direction, a second conductive element having a second refractive index coupled with said plurality of patterns an insulator disposed among said one or more gaps, the second refractive index being substantially the same as said first refractive index.

### SUMMARY OF THE INVENTION

A technical problem to be solved by the embodiments of the present invention is that: a transparent conductive pattern in a touch screen in the prior art is visible under the ambient light, which influences the display effect.

In order to solve the technical problem described above, according to the embodiments of the present invention, it is provided a touch screen including: a substrate; a touch structure layer disposed on the substrate, herein, the touch structure layer includes a plurality of transparent conducive patterns; and an anti-reflective pattern covering at least an edge of the transparent conductive patterns.

As a preferred embodiment, the anti-reflective pattern covers only the edge of the transparent conductive patterns. Herein a width of the anti-reflective pattern covering only the edge of the transparent conductive patterns may range from 2µm to 20µm; and more preferably, the width may range from 2µm to 4µm.

As another preferred embodiment, the anti-reflective pattern further covers a region between multiple transparent conductive patterns. Herein the width of the anti-reflective pattern covering both the edge of the transparent conductive pattern and the region between multiple transparent conductive patterns ranges from 4µm to 40µm; and more preferably, the width may range from 5µm to 8µm.

Preferably, the anti-reflective pattern in the touch screen described above is made of a black material.

According to the embodiments of the present invention, it is also provided a touch display panel, including: a display panel; a touch structure layer disposed on the display panel, herein the touch structure layer includes a plurality of transparent conductive patterns; and an anti-reflective pattern covering at least an edge of the transparent conductive patterns.

The display panel generally includes a first substrate and a second substrate disposed oppositely, and the touch structure layer is disposed on a surface of the first substrate that is away from the second substrate.

As a preferred embodiment, the anti-reflective pattern covers only the edge of the transparent conductive pattern. Herein the width of the anti-reflective pattern covering only the edge of the transparent conductive patterns may range from 2µm to 20µm; and more preferably, the width may range from 2µm to 4µm.

As another preferred embodiment, the anti-reflective pattern further covers a region between multiple transparent conductive patterns. Herein the width of the anti-reflective pattern covering both the edge of the transparent conductive patterns and the region between multiple transparent conductive patterns ranges from 4µm to 40µm; and more preferably, the width may range from 5µm to 8µm.

The anti-reflective pattern in the touch screen described above is made of a black material.

Preferably, the display panel is a liquid crystal display panel, an Organic Light-Emitting Diode (OLED) display panel, a plasma display panel or an electronic paper.

According to the embodiments of the present invention, it is also provided a touch display device including the touch display panel described above.

Compared with the prior art, in the touch screen, in the touch display panel and the touch display device provided by the embodiments of the present invention, the anti-reflective pattern is used to cover the edges of the transparent conductive patterns and/or the region between multiple transparent conductive patterns in the touch screen, thus significantly reducing the visibility of the transparent conductive pattern in the touch screen under the ambient light, and improving the display effect.

### BRIEF DESCRIPTION OF THE DRAWINGS

Figure 1 is a sectional view structural schematic diagram of an ON-CELL touch screen in the prior art;
Figure 2 is a top view structural schematic diagram of a touch screen according to a first embodiment of the present invention;
Figure 3 is a sectional view of Figure 2 along A-A';
Figure 4 is a top view structural schematic diagram of a touch screen according to a second embodiment of the present invention;
Figure 5 is a sectional view of Figure 4 along B-B';
Figure 6 is a top view structural schematic diagram of a touch screen according to a third embodiment of the present invention;
Figure 7 is a sectional view of Figure 6 along C-C';
Figure 8 is a top view structural schematic diagram of a touch screen according to a fourth embodiment of the present invention;
Figure 9 is a sectional view of Figure 8 along D-D';
Figure 10 is a top view structural schematic diagram of a touch screen according to a fifth embodiment of the present invention;
Figure 11 is a sectional view of Figure 10 along E-E';
Figure 12 is a top view structural schematic diagram of a touch screen according to a sixth embodiment of the present invention;
Figure 13 is a sectional view of Figure 12 along F-F';
Figure 14 is a sectional structural schematic diagram of an ON-CELL touch display panel according to a seventh embodiment of the present invention; and
Figure 15 is a top view structural schematic diagram of a touch display device according to an eight embodiment of the present invention.

### DETAILED DESCRIPTION OF THE INVENTION

By research and experiment, the inventor found that there may be two main reasons for the visibility of a transparent conductive pattern in a touch screen in the prior art (especially in case of a strong ambient light), one reason is the abnormal reflection of input light at the edge and the lateral surface of the transparent conductive pattern (a dotted circle as shown in Figure 1); the other reason is that for the input light in the environment that is input on a surface of the touch screen, the reflectivity on the surface of a region (S1 as shown in Figure 1) covered with the transparent conductive pattern is different from that on the surface of a region (S2 as shown in Figure 1) not covered with the transparent conductive pattern.

In order to reduce the visibility of the transparent conductive pattern, the core concept of the present invention is that the edges of the transparent conductive pattern and/or the region not covered with the transparent conductive pattern (or a region between multiple transparent conductive patterns) are covered with an anti-reflective pattern, the light reflectivity of the anti-reflective pattern covering the edges of the transparent conductive patterns and/or the region between multiple conductive patterns is low, and even can be neglected, therefore the input light is almost reflected only in the region covered with the transparent conductive pattern; and the size of the anti-reflective pattern is controlled such that the anti-reflective pattern is invisible to the human eyes, thus greatly reducing the visibility of the transparent conductive pattern.

### First embodiment

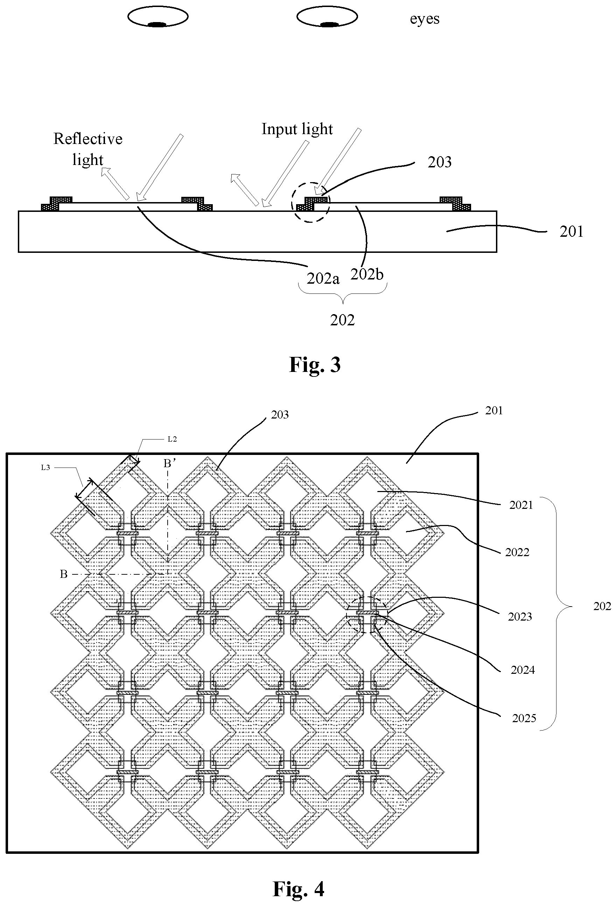

Figure 2 is a top view structural schematic diagram of a touch screen according to a first embodiment of the present invention. Figure 3 is a sectional view of Figure 2 along A-A'. As shown in Figure 2 and Figure 3, the touch screen according to the first embodiment of the present invention includes a substrate 201, and the substrate 201 may be made of a transparent material such as glass, quartz, plastic and the like. Along a direction towards the human eyes, the touch screen sequentially includes a touch structure layer 202 located on the substrate 201, and an anti-reflective pattern 203 covering the edges of transparent conductive patterns 202a and 202b (a dotted circle as shown in Figure 3). The anti-reflective pattern 203 may be directly connected to the transparent conductive pattern, or may not be directly connected to the transparent conductive pattern.

The touch screen shown in Figure 2 is a capacitive touch screen. It can be seen from the Figure 2 that the touch structure layer 202 includes multiple drive lines 2021 and multiple sense lines 2022 perpendicularly intersecting with the multiple drive lines 2021. The multiple drive lines 2021 and the multiple sense lines 2022 are generally made of a transparent conductive material, and form multiple transparent conductive patterns 202a, 202b. In Figure 3, the multiple sense lines 2022 and the multiple drive lines 2021 are located on the same layer, thus each sense line 2022 is divided into multiple segments by the multiple drive lines 2021. At the junction 2023, two segments of the same sense line 2022 are connected via a bridging metal 2024, the bridging metal 2024 and the drive line 2021 are insulated from each other by an insulating layer 2025 provided between them. Of course, the sense line may be 2021, and the drive line may be 2022.

Where, the material of the transparent conductive pattern may be ITO, IZO or a combination thereof; the transparent conductive pattern may be made of a single-layer transparent material or a multi-layer transparent material. The anti-reflective pattern 203 is made of a black material, thus the reflectivity thereof is low, and the transmissivity of the black anti-reflective pattern 203 is also low.

Specifically, in Figure 3 the edges of the transparent conductive patterns 202a and 202b are covered with the anti-reflective pattern 203, thus reducing and even eliminating the abnormal reflection of input light at the edges of the transparent conductive patterns 202a and 202b, and reducing the visibility of the transparent conductive pattern.

In addition, the size of the anti-reflective pattern 203 is controlled such that the anti-reflective pattern 203 is sufficiently small, thus making the anti-reflective pattern 203 invisible to the human eyes. Although the smaller the size of the anti-reflective pattern 203 is, the more invisible to the human eyes it will be, the minimum size is limited by the manufacturing process. Therefore, the size of the anti-reflective pattern 203 has a preferred range. As shown in Figure 2, the anti-reflective pattern 203 has a matrix structure in a grid shape, in which the width L1 of a grid line of the anti-reflective pattern 203 preferably ranges from 2µm to 20µm. Furthermore, in order to make the anti-reflective pattern 203 in a grid shape invisible, the width L1 of the grid line of the anti-reflective pattern 203 ranges from 2µm to 4µm.

### Second embodiment

In the first embodiment, the anti-reflective pattern 203 covers only the edges of the transparent conductive patterns 202a and 202b; however, based on the core concept of the present invention, the anti-reflective pattern 203 may further cover a region that is not covered with the transparent conductive pattern, as long as the anti-reflective pattern 203 covers at least the edges of the transparent conductive patterns 202a and 202b.

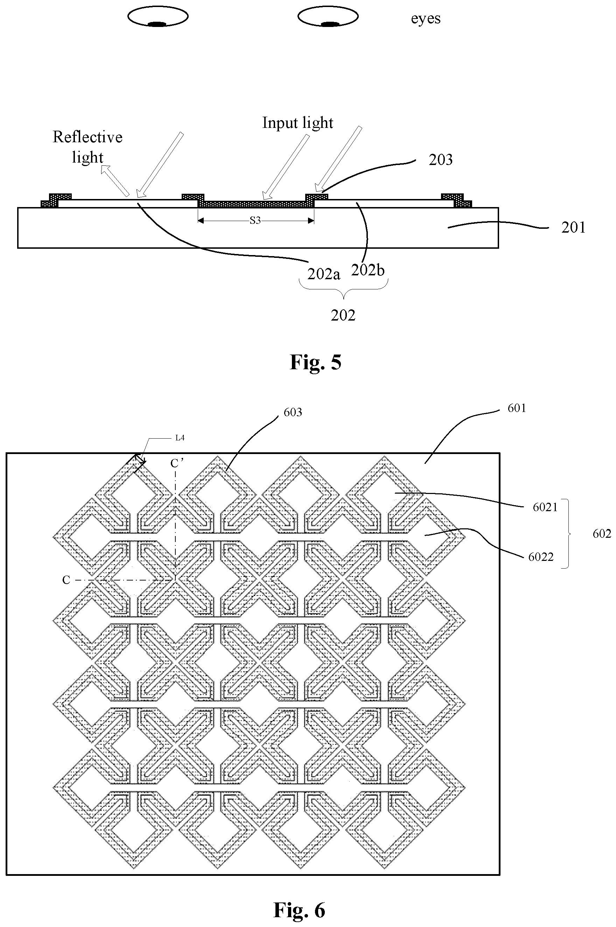

Figure 4 is a top view structural schematic diagram of a touch screen according to a second embodiment of the present invention. Figure 5 is a sectional view of Figure 4 along B-B'. As shown in Figure 4 and Figure 5, the touch screen according to the second embodiment of the present invention has a structure similar to that of the first embodiment, the same parts will not be described again, the first embodiment and the second embodiment are different only in that the anti-reflective pattern 203 further covers a region between multiple transparent conductive patterns 202a and 202b (S3 as shown in Figure 5).

Of course, similar to the first embodiment, the anti-reflective pattern 203 also has a matrix structure in a grid shape. In order to make the anti-reflective pattern 203 in a grid shape invisible and conform to the limit of process conditions, the preferred range of the width L3 of a grid line of the anti-reflective pattern 203 covering both the edges of the transparent conductive pattern and the region between multiple transparent conductive patterns is 4µm to 40µm, and the preferred width L2 of the anti-reflective pattern 203 covering the edges of the transparent conductive pattern ranges from 2µm to 20µm. Furthermore, in order to make the anti-reflective pattern 203 in a grid shape invisible, the width L3 of the grid line of the anti-reflective pattern 203 covering both the edges of the transparent conductive pattern and the region between multiple transparent conductive patterns preferably ranges from 5µm to 8µm, and the width L2 of the anti-reflective pattern 203 covering the edges of the transparent conductive pattern preferably ranges from 2µm to 4µm.

The touch structure layer in the first embodiment and the second embodiment is only a typical capacitive touch structure. The specific touch structure layer is not defined in the present invention; the touch structure layer may be a resistive one, a capacitive one, and an infrared one and so on. The problem of the visibility of the transparent conductive pattern can be partially or completely solved, as long as the touch structure layer includes the transparent conductive pattern and the anti-reflective pattern covering at least the edges of the transparent conductive pattern is provided between the transparent conductive pattern and the human eyes.

### Third embodiment

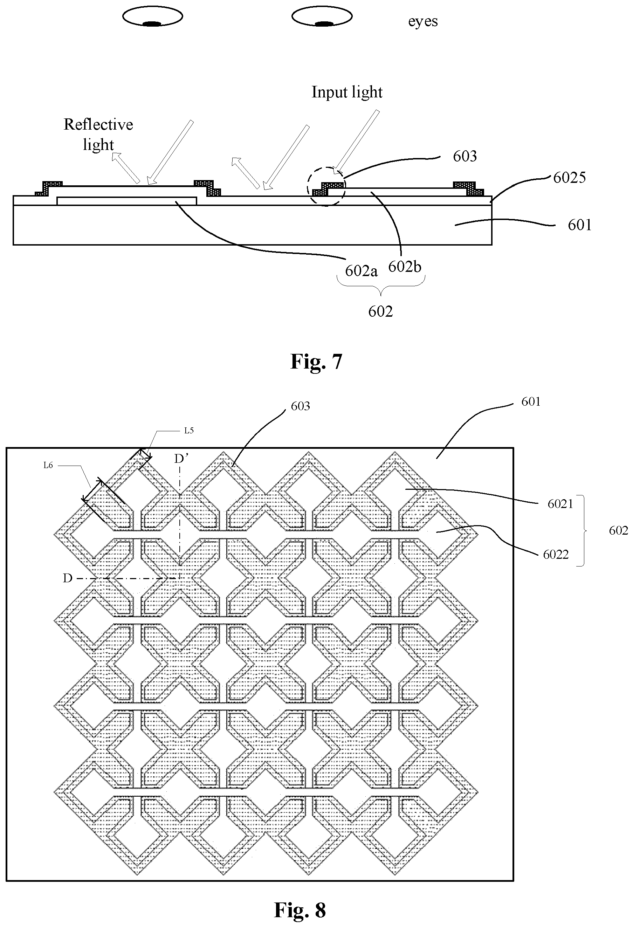

Figure 6 is a top view structural schematic diagram of a touch screen provided by a third embodiment of the invention. Figure 7 is a sectional view of Figure 6 along C-C'.

As shown in Figure 6 and Figure 7, the touch screen provided by the third embodiment of the present invention includes a substrate 601, and the substrate 601 may be made of a transparent material such as glass, quartz, plastic and the like. Along a direction towards the human eyes, the touch screen sequentially includes a touch structure layer 602 located on the substrate 601, and an anti-reflective pattern 603 covering the edges of transparent patterns 602a and 602b (a dotted circle as shown in Figure 7).

The touch screen shown in Figure 6 is a capacitive touch screen. It can be seen from Figure 6 that the touch structure layer 602 includes multiple drive lines 6021 and multiple sense lines 6022 perpendicularly intersecting with the multiple drive lines 6021. The multiple drive lines 6021 and multiple sense lines 6022 are generally made of a transparent conductive material, and form multiple transparent conductive patterns 602a, 602b. In Figure 7, the multiple sense lines 6022 and the multiple drive lines 6021 are located on different layers, and the multiple sense lines 6022 and the multiple drive lines 6021 are insulated from each other by an insulating layer 6025 covering the whole range of the substrate. Of course, the sense line may be 6021, and the drive line may be 6022.

Where, the material of the transparent conductive pattern may be ITO, IZO or a combination thereof; the transparent conductive pattern may be made of a single-layer transparent material or a multi-layer transparent material. The anti-reflective pattern 603 is made of a black material, thus the reflectivity thereof is low, and the transmissivity of the black anti-reflective pattern 603 is also low.

Specifically, in Figure 7, the edges of the transparent conductive patterns 602a and 602b are covered with the anti-reflective pattern 603, thus reducing and even eliminating the abnormal reflection of input light at the edges of the transparent conductive patterns 602a and 602b, and reducing the visibility of the transparent conductive pattern. It should be noted that, since the transparent conductive pattern 602a and the transparent conductive pattern 602b are located on different layers, the anti-reflective pattern 603 is directly connected to the transparent conductive pattern 602b, and is not directly connected to the transparent conductive pattern 602a, and the anti-reflective pattern 603 is provided between the transparent conductive patterns 602a, 602b and the human eyes.

In addition, similar to the first embodiment, the size of the anti-reflective pattern 603 is controlled such that the anti-reflective pattern 603 is sufficiently small, thus making the anti-reflective pattern 603 invisible to the human eyes. The anti-reflective pattern 603 also has a matrix structure in a grid shape, and the width L4 of a grid line of the anti-reflective pattern 603 preferably ranges from 2µm to 20µm. Furthermore, in order to make the anti-reflective pattern 603 in a grid shape invisible, the width L4 of the grid line of the anti-reflective pattern ranges from 2µm to 4µm.

### Fourth embodiment

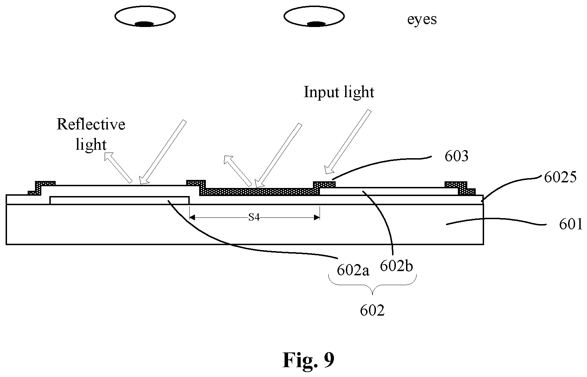

Figure 8 is a top view structural schematic diagram of a touch screen provided by a fourth embodiment of the present invention. Figure 9 is a sectional view of Figure 8 along D-D'. As shown in Figure 8 and Figure 9, the touch screen provided by the fourth embodiment of the present invention has a structure similar to that of the third embodiment, the same parts will not be described again, the fourth embodiment and the third embodiment are different only in that the anti-reflective pattern 603 further covers a region between multiple transparent conductive patterns 602a and 602b (S4 as shown in Figure 9).

Of course, similar to the second embodiment, the anti-reflective pattern 603 also has a matrix structure in a grid shape. In order to make the anti-reflective pattern 603 in a grid shape invisible and conform to the limit of process conditions, the preferred range of the width L6 of a grid line of the anti-reflective pattern 603 covering both the edges of the transparent conductive pattern and a region between multiple transparent conductive patterns is 4µm to 40µm, and the width L5 of the anti-reflective pattern 603 covering the edges of the transparent conductive pattern preferably ranges from 2µm to 20µm. Furthermore, in order to make the anti-reflective pattern 603 in a grid shape invisible, the width L6 of the grid line of the anti-reflective pattern 603 covering both the edges of the transparent conductive pattern and the region between multiple transparent conductive patterns preferably ranges from 5µm to 8µm, and the width L5 of the anti-reflective pattern 603 covering the edges of the transparent conductive pattern preferably ranges from 2µm to 4µm.

### Fifth embodiment

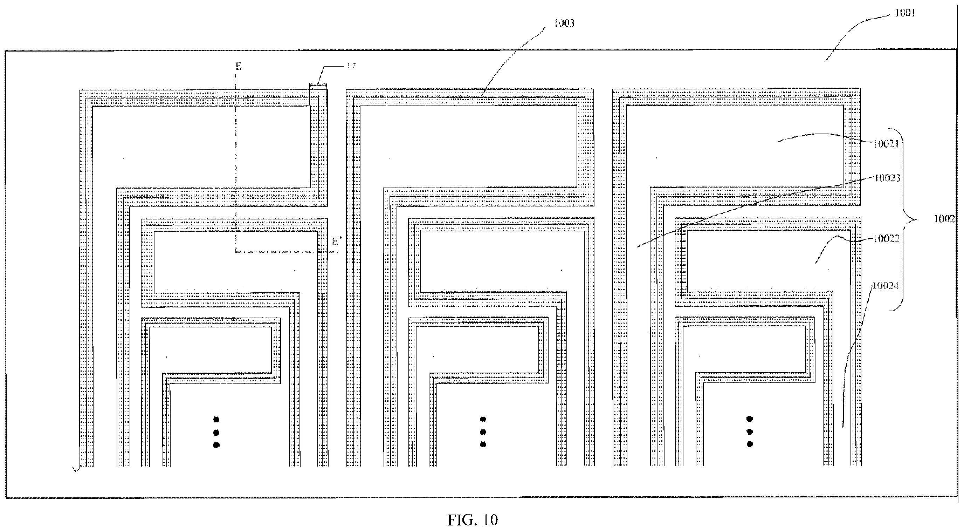

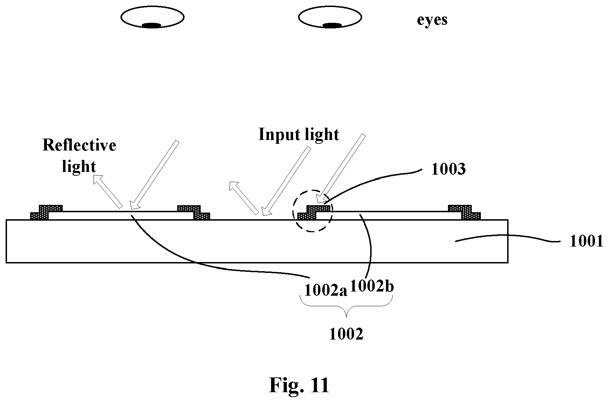

Figure 10 is a top view structural schematic diagram of a touch screen provided by a fifth embodiment of the present invention. Figure 11 is a sectional view of Figure 10 along E-E'.

As shown in Figure 10 and Figure 11, the touch screen provided by the fifth embodiment of the present invention includes a substrate 1001, and the substrate 1001 may be made of a transparent material such as glass, quartz, plastic and the like. Along a direction towards the human eyes, the touch screen sequentially includes a touch structure layer 1002 located on the substrate 1001, and an anti-reflective pattern 1003 covering the edges of transparent patterns 1002a and 1002b (a dotted circle as shown in Figure 11).

The touch screen shown in Figure 10 is a capacitive touch screen. It can be seen from Figure 10 that the touch structure layer 1002 includes: multiple drive electrodes 10021; multiple sensing electrodes 10022; multiple drive electrode leads 10023 , the drive electrode 10021 each being correspondingly connected to an external terminal (not shown in the drawings) via the drive electrode lead 10023; and multiple sensing electrode leads 10024, the sensing electrodes 10022 each being correspondingly connected to an external terminal (not shown in the drawings) via the sensing electrode lead 10024. The multiple drive electrodes 10021, the multiple sensing electrodes 10022, the multiple drive electrode leads 10023 and the multiple sensing electrode leads 10024 are generally made of a transparent conductive material, and form multiple transparent conductive patterns 1002a and 1002b. In Figure 10, the multiple drive electrodes 10021, the multiple sensing electrodes 10022, the multiple drive electrode leads 10023 and the multiple sensing electrode leads 10024 are located on the same layer. Of course, the sensing electrode may be 10021, the drive electrode may be 10022, the sensing electrode lead may be 10023, and the drive electrode lead may be 10024.

Where, the material of the transparent conductive pattern may be ITO, IZO or a combination thereof; the transparent conductive pattern may be made of a single-layer transparent material or a multi-layer transparent material. The anti-reflective pattern 1003 is made of a black material, thus the reflectivity thereof is low, and the transmissivity of the black anti-reflective pattern 1003 is also low.

Specifically, in Figure 10, the anti-reflective pattern 1003 covers the edges of the transparent conductive patterns 1002a and 1002b, thus reducing and even eliminating the abnormal reflection of input light at the edges of the transparent conductive patterns 1002a and 1002b, and reducing the visibility of the transparent conductive pattern. It should be noted that the transparent conductive pattern 1002a and the transparent conductive pattern 1002b are located on the same layer, the anti-reflective pattern 1003 is provided between the transparent conductive pattern 1002a, 1002b and the human eyes, and it may be directly or not directly connected to the transparent conductive patterns 1002a and 1002b.

In addition, similar to the first embodiment, the size of the anti-reflective pattern 1003 is controlled such that the anti-reflective pattern 1003 is sufficiently small, thus making the anti-reflective pattern 1003 invisible to the human eyes. The anti-reflective pattern 1003 also has a matrix structure in a grid shape, the width L7 of a grid line of the anti-reflective pattern 1003 preferably ranges from 2µm to 20µm. Furthermore, in order to make the anti-reflective pattern 1003 in a grid shape invisible, the width of the grid line of the anti-reflective pattern 1003 ranges from 2µm to 4µm.

### Sixth embodiment

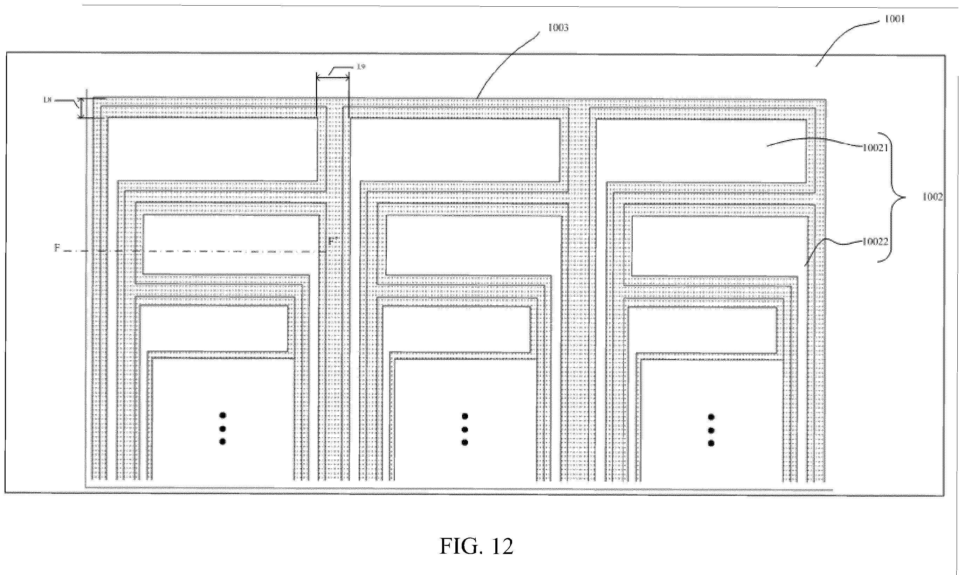

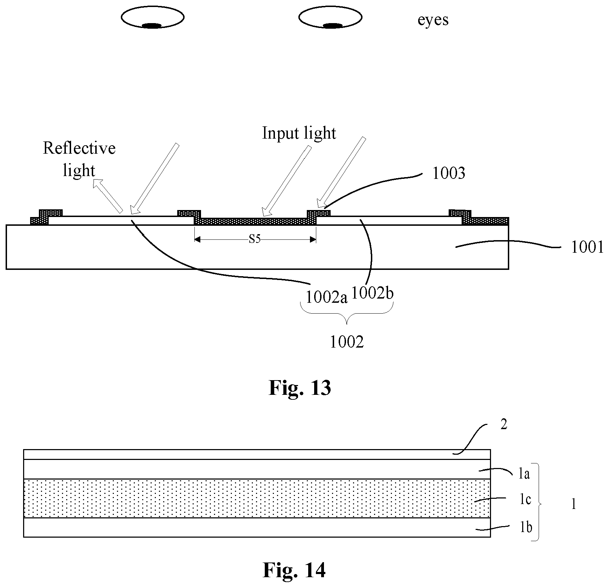

Figure 12 is a top view structural schematic diagram of a touch screen provided by a sixth embodiment of the present invention. Figure 13 is a sectional view of Figure 12 along F-F'. As shown in Figure 12 and Figure 13, the touch screen provided by the sixth embodiment of the present invention has a structure similar to that of the fifth embodiment, the same parts will not be described again, the sixth embodiment and the fifth embodiment are different only in that the anti-reflective pattern 1003 further covers a region between multiple transparent conductive patterns 1002a and 1002b (S5 as shown in Figure 13).

Of course, similar to the second embodiment, the anti-reflective pattern 1003 also has a matrix structure in a grid shape. In order to make the anti-reflective pattern 1003 in a grid shape invisible and conform to the limit of process conditions, the preferred range of the width L9 of a grid line of the anti-reflective pattern 1003 covering both the edges of the transparent conductive pattern and a region between multiple transparent conductive patterns is 4µm to 40µm, and the width L8 of the anti-reflective pattern 1003 covering the edges of the transparent conductive pattern preferably ranges from 2µm to 20µm. Furthermore, in order to make the anti-reflective pattern 1003 in a grid shape invisible, the preferred range of the width L9 of the grid line of the anti-reflective pattern 1003 covering both the edges of the transparent conductive pattern and the region between multiple transparent conductive patterns is 5µm to 8µm, and the width L8 of the anti-reflective pattern 1003 covering the edges of the transparent conductive pattern preferably ranges from 2µm to 4µm.

### Seventh embodiment

According to a seventh embodiment of the present invention, it is provided an ON-CELL touch display panel. As shown in Figure 14, the touch display panel includes a display panel 1, and sequentially includes, along a direction towards the human eyes, a touch structure layer 2 located on the display panel 1, and an anti-reflective pattern (not shown in the Figure) covering at least the edges of transparent conductive pattern. The touch display panel can be referred to as ON-CELL touch display panel, because the touch structure layer 2 is directly located on an external surface of the display panel 1. Where, the touch structure layer 2 includes multiple transparent conductive patterns; the touch structure layer 2 may have the same structure as that of the touch structure layers in any one of the first embodiment, the second embodiment, the third embodiment and the fourth embodiment; the same technology as that in any one of the first embodiment, the second embodiment, the third embodiment and the fourth embodiment may be employed in both the structure of the anti-reflective pattern and the position relation between the anti-reflective pattern and the touch structure layer 2, it will not be described again herein. The display panel 1 may be a liquid crystal display panel, an OLED display panel, a plasma display panel or an electronic paper. For example, in the case where the display panel is the liquid crystal display panel, the display panel includes: a first substrate 1a and a second substrate 1b arranged oppositely; and a liquid crystal layer 1c arranged between the first substrate 1a and the second substrate 1b. One of the first substrate 1a and the second substrate 1b is a color film substrate, and the other one is a TFT array substrate. The touch structure layer 2 may be directly or indirectly arranged on a surface of the first substrate 1a that is away from the second substrate 1b.

### Eighth embodiment

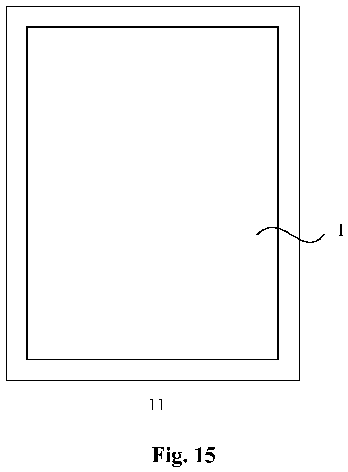

An eighth embodiment of the present invention provides a touch display device including the touch display panel provided by the seventh embodiment. Figure 15 is a top view structural schematic diagram of a touch display device according to an eight embodiment of the present invention. As shown in Figure 15, the touch display device 11 includes a liquid crystal display panel 1, the touch display device further includes a backlight module (not shown in the drawing) providing backlight for the liquid crystal display panel.

Obviously, various alternations and modifications can be made to the invention by those skilled in the art without departing from the scope of the invention. Therefore, as long as these alternations and modifications of the invention fall within the scope of the claims, the invention is intended to include these alternations and modifications.

## Claims

1. A touch screen, comprising:
a substrate;
a touch structure layer disposed on the substrate, wherein the touch structure layer comprises a plurality of transparent conductive patterns; **characterized in that** the touch screen further comprises:
an anti-reflective pattern covering at least edges of the transparent conductive patterns, wherein the anti-reflective pattern is made of a black material, so that the reflectivity and the transmissivity of the anti-reflective pattern are low.

2. The touch screen according to claim 1, wherein the anti-reflective pattern covers only the edges of the transparent conductive patterns.

3. The touch screen according to claim 2, wherein a width of the anti-reflective pattern covering only the edges of the transparent conductive patterns ranges from 2µm to 20µm.

4. The touch screen according to claim 1, wherein the anti-reflective pattern further covers a region between the transparent conductive patterns.

5. The touch screen according to claim 4, wherein a width of the anti-reflective pattern covering both the edges of the transparent conductive patterns and the region between the transparent conductive patterns ranges from 4µm to 40µm.

6. A touch display panel, comprising:
a display panel;
a touch structure layer disposed on the display panel, wherein the touch structure layer comprises a plurality of transparent conductive patterns; **characterized in that** the touch display panel further comprises:
an anti-reflective pattern covering edges of the transparent conductive patterns, wherein the anti-reflective pattern is made of a black material, so that the reflectivity and the transmissivity of the anti-reflective pattern are low.

7. The touch display panel according to claim 6, wherein the anti-reflective pattern covers only the edges of the transparent conductive patterns.

8. The touch display panel according to claim 7, wherein a width of the anti-reflective pattern covering only the edges of the transparent conductive patterns ranges from 2µm to 20µm.

9. The touch display panel according to claim 7, wherein the anti-reflective pattern further covers a region between the transparent conductive patterns.

10. The touch display panel according to claim 9, wherein a width of the anti-reflective pattern covering both the edges of the transparent conductive patterns and the region between the transparent conductive patterns ranges from 4µm to 40µm.

11. The touch display panel according to any one of claims 6-10, wherein the display panel comprises:
a first substrate;
and a second substrate opposite the first substrate, wherein the touch structure layer is disposed on a surface of the first substrate that is away from the second substrate.

12. The touch display panel according to any one of claims 6-11, wherein the touch display panel is a liquid crystal display panel, an Organic Light-Emitting Diode (OLED) display panel, a plasma display panel or an electronic paper.

13. A touch display device, comprising the touch display panel according to any one of claims 6-12.

## Patentansprüche

1. Berührungsbildschirm, aufweisend:
ein Substrat;
eine auf dem Substrat angeordnete Berührungsstrukturschicht, wobei die Berührungsstrukturschicht eine Vielzahl von transparenten leitfähigen Mustern aufweist; **dadurch gekennzeichnet, dass** der Berührungsbildschirm darüber hinaus aufweist:
ein Antireflexionsmuster, das zumindest Ränder der transparenten leitfähigen Muster bedeckt, wobei das Antireflexionsmuster aus einem schwarzen Material hergestellt ist, so dass das Reflexionsvermögen und der Transmissionsgrad des Antireflexionsmusters niedrig sind.

2. Berührungsbildschirm nach Anspruch 1, wobei das Antireflexionsmuster nur die Ränder der transparenten leitfähigen Muster bedeckt.

3. Berührungsbildschirm nach Anspruch 2, wobei eine Breite des Antireflexionsmusters, das nur die Ränder der transparenten leitfähigen Muster bedeckt, 2µm bis 20µm beträgt.

4. Berührungsbildschirm nach Anspruch 1, wobei das Antireflexionsmuster darüber hinaus einen Bereich zwischen den transparenten leitfähigen Mustern bedeckt.

5. Berührungsbildschirm nach Anspruch 4, wobei eine Breite des Antireflexionsmusters, das sowohl die Ränder der transparenten leitfähigen Muster als auch den Bereich zwischen den transparenten leitfähigen Mustern bedeckt, 4µm bis 40µm beträgt.

6. Berührungsanzeigetafel, aufweisend:
eine Anzeigetafel;
eine auf der Anzeigetafel angeordnete Berührungsstrukturschicht, wobei die Berührungsstrukturschicht eine Vielzahl von transparenten leitfähigen Mustern aufweist; **dadurch gekennzeichnet, dass** die Berührungsanzeigetafel darüber hinaus aufweist:
ein Antireflexionsmuster, das Ränder der transparenten leitfähigen Muster bedeckt, wobei das Antireflexionsmuster aus einem schwarzen Material hergestellt ist, so dass das Reflexionsvermögen und der Transmissionsgrad des Antireflexionsmusters niedrig sind.

7. Berührungsanzeigetafel nach Anspruch 6, wobei das Antireflexionsmuster nur die Ränder der transparenten leitfähigen Muster bedeckt.

8. Berührungsanzeigetafel nach Anspruch 7, wobei eine Breite des Antireflexionsmusters, das nur die Ränder der transparenten leitfähigen Muster bedeckt, 2µm bis 20µm beträgt.

9. Berührungsanzeigetafel nach Anspruch 7, wobei das Antireflexionsmuster darüber hinaus einen Bereich zwischen den transparenten leitfähigen Mustern bedeckt.

10. Berührungsanzeigetafel nach Anspruch 9, wobei eine Breite des Antireflexionsmusters, das sowohl die Ränder der transparenten leitfähigen Muster als auch den Bereich zwischen den transparenten leitfähigen Mustern bedeckt, 4µm bis 40µm beträgt.

11. Berührungsanzeigetafel nach einem der Ansprüche 6-10, wobei die Anzeigetafel aufweist:
ein erstes Substrat;
und ein zweites Substrat entgegengesetzt zum ersten Substrat, wobei die Berührungsstrukturschicht auf einer vom zweiten Substrat abgewandten Oberfläche des ersten Substrats angeordnet ist.

12. Berührungsanzeigetafel nach einem der Ansprüche 6-11, wobei die Berührungsanzeigetafel eine Flüssigkristallanzeigetafel, eine Anzeigetafel auf Basis einer organischen Leuchtdiode (OLED), eine Plasmaanzeigetafel oder ein elektronisches Papier ist.

13. Berührungsanzeigevorrichtung, die Berührungsanzeigetafel nach einem der Ansprüche 6-12 aufweisend.

## Revendications

1. Écran tactile, comprenant :
un substrat ;
une couche de structure tactile disposée sur le substrat, sachant que la couche de structure tactile comprend une pluralité de motifs conducteurs transparents ;
**caractérisé en ce que** l'écran tactile comprend en outre :
un motif antiréfléchissant recouvrant au moins des bords des motifs conducteurs transparents, sachant que le motif antiréfléchissant est composé d'un matériau noir, de sorte que la réflectivité et la transmissivité du motif antiréfléchissant soient faibles.

2. L'écran tactile selon la revendication 1, sachant que le motif antiréfléchissant recouvre seulement les bords des motifs conducteurs transparents.

3. L'écran tactile selon la revendication 2, sachant qu'une largeur du motif antiréfléchissant recouvrant seulement les bords des motifs conducteurs transparents va de 2 µm à 20 µm.

4. L'écran tactile selon la revendication 1, sachant que le motif antiréfléchissant recouvre en outre une région entre les motifs conducteurs transparents.

5. L'écran tactile selon la revendication 4, sachant qu'une largeur du motif antiréfléchissant recouvrant à la fois les bords des motifs conducteurs transparents et la région entre les motifs conducteurs transparents va de 4 µm à 40 µm.

6. Panneau d'affichage tactile, comprenant :
un panneau d'affichage ;
une couche de structure tactile disposée sur le panneau d'affichage, sachant que la couche de structure tactile comprend une pluralité de motifs conducteurs transparents ; **caractérisé en ce que** le panneau d'affichage tactile comprend en outre :
un motif antiréfléchissant recouvrant des bords des motifs conducteurs transparents, sachant que le motif antiréfléchissant est composé d'un matériau noir, de sorte que la réflectivité et la transmissivité du motif antiréfléchissant soient faibles.

7. Le panneau d'affichage tactile selon la revendication 6, sachant que le motif antiréfléchissant recouvre seulement les bords des motifs conducteurs transparents.

8. Le panneau d'affichage tactile selon la revendication 7, sachant qu'une largeur du motif antiréfléchissant recouvrant seulement les bords des motifs conducteurs transparents va de 2 µm à 20 µm.

9. Le panneau d'affichage tactile selon la revendication 7, sachant que le motif antiréfléchissant recouvre en outre une région entre les motifs conducteurs transparents.

10. Le panneau d'affichage tactile selon la revendication 9, sachant qu'une largeur du motif antiréfléchissant recouvrant à la fois les bords des motifs conducteurs transparents et la région entre les motifs conducteurs transparents va de 4 µm à 40 µm.

11. Le panneau d'affichage tactile selon l'une quelconque des revendications 6 à 10, sachant que le panneau d'affichage comprend :
un premier substrat ;
et un deuxième substrat à l'opposé du premier substrat, sachant que la couche de structure tactile est disposée sur une surface du premier substrat qui est éloignée du deuxième substrat.

12. Le panneau d'affichage tactile selon l'une quelconque des revendications 6 à 11, sachant que le panneau d'affichage tactile est un panneau d'affichage à cristaux liquides, un panneau d'affichage à diodes électroluminescentes organiques (OLED), un panneau d'affichage à plasma ou un papier électronique.

13. Dispositif d'affichage tactile, comprenant le panneau d'affichage tactile selon l'une quelconque des revendications 6 à 12.
